# EUROPÄISCHE PATENTSCHRIFT

(11) **EP 4 004 664 B1**
(45) Veröffentlichungstag und Bekanntmachung des Hinweises auf die Patenterteilung: **03.07.2024**
(21) Anmeldenummer: 20733796.5
(22) Anmeldetag: 18.06.2020
(51) Int. Cl.: G05B 19/418

(54) **VERFAHREN ZUR VERIFIZIERUNG DES IN EINEM ASSET MANAGEMENT SYSTEM EINGETRAGENEN FELDGERÄTEBESTANDS**
METHOD FOR VERIFYING THE FIELD DEVICE INVENTORY ENTERED IN AN ASSET MANAGEMENT SYSTEM
PROCÉDÉ POUR VÉRIFIER L'INVENTAIRE DES APPAREILS DE TERRAIN ENREGISTRÉS DANS UN SYSTÈME DE GESTION DES ACTIFS

(30) Priorität: 22.07.2019 DE 102019119714
(43) Veröffentlichungstag der Anmeldung: 01.06.2022
(73) Patentinhaber: Endress+Hauser Process Solutions AG, 4153 Reinach (CH)
(72) Erfinder: GERSBACH, Adrian, 4055 Basel (CH); MANEVAL, Michael, 79650 Schopfheim (DE)
(74) Vertreter: Kratt-Stubenrauch, Kai Michael
(86) Internationale Anmeldenummer: PCT/EP2020/066987
(87) Internationale Veröffentlichungsnummer: WO 2021/013444

(56) Entgegenhaltungen:
- WO-A1-2017/029079
- DE-A1-102007 062 914
- DE-A1-102015 121 947
- DE-A1-102017 109 029
- US-A1- 2018 083 916

## Beschreibung

Die Erfindung betrifft ein Verfahren zur Verifizierung des in einem Asset Management System eingetragenen Feldgerätebestands, wobei eine Vielzahl von Feldgeräten in einem Kommunikationsnetzwerk eingebunden sind.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Leitsystem-Anwendungen (Siemens PCS7, ABB Symphony, Emerson Delta V) integriert sind. Ebenso ist es möglich, die Bedienprogramme auf einem mobilen Bediengerät auszuführen, um die Feldgeräte mittels dieser zu bedienen.

Parallel zu den übergeordneten Einheiten sind häufig Gateways oder Plant Access Point im Feldbusnetzwerk angeordnet. Diese erlauben das Mithören der auf dem Feldbusnetzwerk ausgetauschten Telegramme und das Bereitstellen deren Inhalte (beispielsweise Messwerte von Prozessvariablen, Gerätestatus oder Diagnoseinformationen), beispielsweise über das Internet oder ein lokales Netzwerk des Anlagenbetreibers. Insbesondere werden die Inhalte einem sogenannten Asset Management System zur Verfügung gestellt. Ein solches Asset Management System verwaltet das Inventar des Anlagenbetreibers und stellt diesem die in der Anlage eingesetzten Feldgeräte, sowie deren Gerätestatus und optional weitere Geräteinformationen dar. Insbesondere stellt ein in dem Asset Management System erfasstes (Feld-)Gerät ein exaktes elektronisches Abbild des im Feld eingesetzten (Feld-)Geräts dar (Digital Twin).

Es kann zwischen verschiedenen Arten unterschieden werden, wie die Assetliste (also die Liste der in der Anlage befindlichen Geräte) in einem Asset Management System erfasst werden kann:
a) Die Daten der zu erfassenden Geräte wird direkt aus der Planungsphase, bzw. Bestellphase übernommen.
b) Durch visuelle, bzw. manuelle Erfassung durch einen Menschen. Hierfür wird beispielsweise die Seriennummer, bzw. das Typenschild des Feldgeräts vor Ort abgelesen und online in das Asset Management System eingetragen.
c) Durch elektronische Erfassung von den (Feld-)Geräten direkt, beispielsweise über einen Feldbus mittels Erfassung an zentraler Stelle, bzw. über eine (mobile) Verarbeitungseinheit.

In jedem der Fälle wird im Asset Management System eine Identifikationsinformation (beispielsweise eine Seriennummer, oder ein, insbesondere elektronisch auslesbares, Typenschild, Informationen bzgl. des Geräteherstellers, Gerätetyp, etc.) des jeweiligen (Feld-)Geräts hinterlegt, anhand derer das Gerät eindeutig identifizierbar ist und der die weiteren Daten, bzw. Informationen, zugeordnet werden.

Oftmals sind diese Identifikationsidentifikationen nicht vorhanden oder nicht eindeutig, wodurch die Geräte im Asset Management System nicht zugeordnet und verfolgt werden können. Damit geht der Mehrwert des Geräts für das Asset Management System verloren.

Häufig besteht der Grund für die unzureichende Zuordnung der Geräte im Asset Management System in mehrdeutig vergebenen Identifikationsinformationen. Wenn sich beispielsweise zur Datenerfassung beim Scan des Feldbusnetzwerks verschiedene Geräte mit der gleichen Seriennummer melden, werden zur Laufzeit Asset Management relevante Daten aller Geräte mit derselben Identifikationsinformation zu dem einen der Seriennummer zugeordneten elektronischen Abbild im Asset Management System zugeordnet. Diese Inkonsistenz mach den Wert des Asset Management Systems für die betroffenen Geräte wertlos - im gravierendsten Falle werden falsche Rückschlüsse bzgl. eines Geräts getroffen und ggf. falsche Aktionen abgeleitet.

Gründe für mehrdeutig vergebene Identifikationsinformationen können beispielsweise sein:
- Der Gerätehersteller hat in der Produktion nicht sichergestellt, dass eine eindeutige Seriennummer vergeben wurde;
- Die Seriennummer, welche auf dem Typenschild eines Geräts angebracht ist, und die elektronisch auslesbare Seriennummer eines Geräts stimmen nicht überein;
- Im Rahmen einer Serviceaktion wurde eine neue Firmware im Gerät geflasht, womit die ursprüngliche Seriennummer überschrieben wurde;
- Beim Schreiben der Seriennummer nach einem Firmwareflashen wurde ein Fehler begangen, bspw. aufgrund eines Tippfehlers oder eines unleserlichen Typenschilds.

Die Druckschriften US 2018/083916 A1, DE 10 2007 062914 A1,
DE 10 2017 109029 A1, DE 10 2015 121947 A1 und WO 2017/029079 A1 offenbaren jeweils Anwendungsbeispiele, in welchen Feldgeräte mit einem übergeordneten System über Kommunikationsnetzwerke kommunizieren, wobei die DE 10 2007 062914 A1 das vollständiges Erfassen und Bereitstellen von Identifikationsinformationen von Feldgeräten zeigt, die DE 10 2017 109029 A1 es erlaubt, einen Überblick auf die Netzwerkinfrastruktur in einer Anlage der Prozessautomatisierung zu erhalten, die DE 10 2015 121947 A1 das Aufspüren mehrfach vergebener Busadressen erlaubt und die WO 2017/029079 A1 die Aufgabe hat, den Einsatzort eines Feldgeräts unter Verwendung von Seriennummern nachzuverfolgen.

Der Erfindung die Aufgabe zugrunde, ein Verfahren vorzustellen, welches es erlaubt, Inkonsistenzen zwischen dem Feldgerätebestand in einem Asset Management System und den tatsächlich in der Anlage befindlichen Feldgeräten zu ermitteln.

Die Aufgabe wird durch ein Verfahren zur Instandhaltung des in einem Asset Management System eingetragenen Feldgerätebestands gelöst, wobei eine Vielzahl von Feldgeräten in einem Kommunikationsnetzwerk eingebunden sind, wobei das Verfahren die folgenden Schritte umfasst:
i. Verbinden einer Verarbeitungseinheit mit dem Kommunikationsnetzwerk;
ii. Auslesen des Adressraums des Kommunikationsnetzwerks mittels der Verarbeitungseinheit zum Generieren einer Liste aller in dem Adressraum befindlichen Feldgeräten;
iii. Aufbau einer Kommunikation zwischen der Verarbeitungseinheit und einem in der Liste befindlichen Feldgerät über einen Kommunikationspfad im ersten Kommunikationsnetzwerk;
iv. Auslesen von Identifikationsinformationen des Feldgeräts über die etablierte Kommunikation mittels der Verarbeitungseinheit, wobei die Identifikationsinformationen zumindest eine Seriennummer des Feldgeräts und einen Netzwerkparameter des Feldgeräts, insbesondere dessen Kommunikationspfad, umfassen;
v. Durchführen einer Konsistenzprüfung auf dem Asset Management System, wobei ein negatives Ergebnis der Konsistenzprüfung erzielt wird, wenn im Asset Management System bereits ein Feldgerät unter der ausgelesenen Seriennummer eingetragen ist;
vi. Überprüfen, im Falle eines negativen Ergebnisses der Konsistenzprüfung, ob im Asset Management System ein dem Feldgerät zugeordneter Netzwerkparameter dem ausgelesenen Netzwerkparameter entspricht; und
vii. Ausgeben einer Notifikation eines Handlungsbedarfs mittels der Verarbeitungseinheit im Falle, dass im Asset Management System ein dem Feldgerät zugeordneter Netzwerkparameter von dem ausgelesenen Netzwerkparameter abweicht.

Erfindungsgemäß ist es also möglich, sicherzustellen, dass nur eindeutig identifizierbare Feldgeräte im Asset Management System angelegt werden. Feldgeräte, welche nicht eindeutig im Asset Management System erfasst wurden, können aufgefunden werden.

Unter einem Kommunikationspfad oder Netzwerkpfad wird eine Kaskade an Netzwerkadressen verstanden. Konkret handelt es sich die Netzwerkadressen derer Geräte im ersten, inklusive des Feldgeräts selbst, welche angesprochen werden müssen, damit die Verarbeitungseinheit die Kommunikation mit dem Feldgerät aufbauen kann. Befindet sich die Verarbeitungseinheit in derselben Ebene, bzw. Hierarchie, wie das Feldgerät, so besteht der Kommunikationspfad aus der Netzwerkadresse des Feldgeräts. Befinden sich ein oder mehrere, beispielsweise durch Gateways getrennte, Ebenen zwischen der Verarbeitungseinheit und dem Feldgerät, so umfasst der Kommunikationspfad zusätzlich die Netzwerkadressen der Gateways. Das Asset Management System benötigt den Kommunikationspfad als signifikantes Unterscheidungsmerkmal der Feldgeräte. Die Netzwerkadresse reicht hierfür nicht aus, da sich die Netzwerkadressen in den unterschiedlichen Ebenen des ersten Kommunikationsnetzwerks wiederholen können.

Feldgeräte, welche im Zusammenhang mit dem erfindungsgemäßen Verfahren genannt werden, sind bereits im einleitenden Teil der Beschreibung definiert worden und beispielhaft aufgeführt.

Gemäß einer vorteilhaften Weiterbildung des erfindungsgemäßen Verfahrens ist vorgesehen, dass das Feldgerät von der Verarbeitungseinheit neu in das Asset Management System eingetragen wird, im Falle, dass im Asset Management System kein Feldgerät mit dem ausgelesenen Netzwerkparameter eingetragen ist. Auf diese Art und Weise wird zum einen der Komfort für den Bediener erhöht, zum anderen werden durch das automatische Anlegen, bzw. Eintragen, weitere Fehler direkt vermieden.

Eine vorteilhafte Ausgestaltung des erfindungsgemäßen Verfahrens sieht vor, dass im Zuge des Auslesens zumindest eine weitere Identifikationsinformation aus dem Feldgerät gelesen wird, insbesondere ein Tag, wobei die Notifikation eines Handlungsbedarfs nur dann ausgegeben wird, wenn im Asset Management System ein dem Feldgerät zugeordneter Netzwerkparameter dem ausgelesenen Netzwerkparameter entspricht und im Asset Management System eine dem Feldgerät zugeordnete weitere Identifikationsinformation der ausgelesenen weiteren Identifikationsinformation entspricht. Beispielsweise kann vorgesehen sein, dass ein Feldgerät neben der Seriennummer, welche sich an einem Typenschild am Gerät befindet, noch eine interne Seriennummer aufweist, welche sich auch systematisch voneinander unterscheiden können. Typischerweise werden beide Seriennummern im Asset Management System zu dem Feldgerät angegeben. Sollte eine der beiden Seriennummern also nach der erfindungsgemäßen Abfrage des Feldgeräts bereits im Asset Management System eingetragen sein, die andere jedoch nicht, so wäre das Feldgerät nach wie vor unterscheidbar.

Als Identifikationsinformation kann jede Information über ein Feldgerät verwendet werden, welche über den Lebenszyklus eines Feldgeräts identisch, bzw. eindeutig bleibt. Vorteilhafterweise kann es vorgesehen sein, dass die Verarbeitungseinheit oder das Asset Management System selbst nachträglich einheitliche neue Seriennummern für die Feldgeräte vergibt, die über die Lebenszeit der Feldgeräte eindeutig bleiben. Diese können nach der Erzeugung und Vergabe auf dem Typenschild der Feldgeräte angebracht werden, sowie eine elektronische Lesbarkeit hinzugefügt werden. Dies behebt den Nachteil, dass die Seriennummern der Feldgeräte, welche elektronisch gespeichert sind, und welche sich auf dem jeweiligen Typenschild befinden, oftmals über den Lebenszyklus voneinander abweichen können.

Gemäß einer vorteilhaften Weiterbildung des erfindungsgemäßen Verfahrens ist vorgesehen, dass die Verarbeitungseinheit eine Handlungsanweisung ausgibt, wobei die Handlungsanweisung zumindest eine Handlung umfasst, durch deren Durchführung der Handlungsbedarf gelöst wird. Das erfindungsgemäße Verfahren erlaubt es dem Bediener also nicht nur, Inkonsistenzen zu entdecken - der Bediener erhält vielmehr direkte Hilfestellungen zur Behebung des Problems. Die Handlungsanweisung wird insbesondere auf einem Display der Verarbeitungseinheit angezeigt oder über ein akustisches Wiedergabemittel der Verarbeitungseinheit ausgegeben. Alternativ übermittelt die Verarbeitungseinheit die Handlungsanweisung an ein weitere Gerät, welche diese dem Bediener ausgibt.

Eine vorteilhafte Ausgestaltung des erfindungsgemäßen Verfahrens sieht vor, dass die Handlungsanweisung zumindest einen der folgenden Schritte umfasst:
- Seriennummer im Feldgerät ändern;
- Weitere Identifikationsinformation im Feldgerät ändern;
- Weitere Identifikationsinformation im Asset Management System hinzufügen.

Die Seriennummer eines Feldgeräts liegt häufig an mehreren Orten vor - Physisch auf dem Typenschild aufgedruckt und elektronisch in einen Speicher des Feldgeräts eingetragen. Beide sollten identisch sein. Hinzu kommen Hardware-, Elektronikkomponenten des Feldgeräts, welche oftmals auch eigene Seriennummern aufweisen. Diese könnten als weitere Identifikationsinformation verwendet werden. Inkonsistenzen können beispielsweise durch einen Firmwareflash oder einen Austausch der entsprechenden Hardware-, Elektronikkomponenten behoben werden.

Gemäß einer vorteilhaften Ausgestaltung des erfindungsgemäßen Verfahrens ist vorgesehen, dass als Verarbeitungseinheit ein PC, ein Laptop oder ein mobiles Endgerät verwendet wird. Alternativ ist jede andere Verarbeitungseinheit einsetzbar, welche es erlaubt, mit dem ersten Kommunikationsnetzwerk verbunden zu werden und welche eine Audiowiedergabemöglichkeit für Handlungsanweisungen aufweist, bspw. eine Anzeigeeinheit, ein Audiowiedergabemittel oder eine Schnittstelle für weitere Geräte. Unter einem mobilen Endgerät wird beispielsweise ein Smartphone oder ein Tablet(-PC) verstanden.

Gemäß einer ersten Variante des erfindungsgemäßen Verfahrens ist vorgesehen, dass als Kommunikationsnetzwerk ein ethernetbasiertes Netzwerk verwendet wird.

Gemäß einer zweiten Variante des erfindungsgemäßen Verfahrens ist vorgesehen, dass als Netzwerk ein Feldbus der Automatisierungstechnik verwendet wird.

Gemäß einer vorteilhaften Ausgestaltung des erfindungsgemäßen Verfahrens ist vorgesehen, dass die Verarbeitungseinheit das Asset Management System über ein zweites Kommunikationsnetzwerk kontaktiert, insbesondere über Internet.

Gemäß einer bevorzugten Ausgestaltung des erfindungsgemäßen Verfahrens ist vorgesehen, dass das Verfahren bei einem Neueinbau eines Feldgeräts, bzw. einem Austausch von einem der Feldgeräte, durchgeführt wird. Typischerweise ist dieser Anwendungsfall derjenige, bei welchem vermehrt Fehler auftreten, bzw. Inkonsistenzen erzeugt werden. Durch Anwendung des erfindungsgemäßen Verfahrens werde diese so von vornherein vermieden.

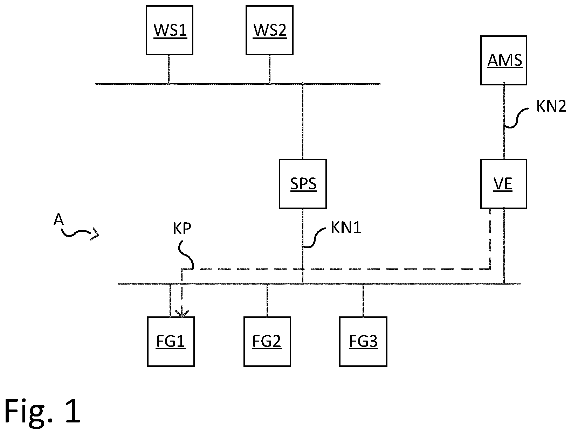

Die Erfindung wird anhand der nachfolgenden Figur näher erläutert. Es zeigt
Fig. 1: ein Ausführungsbeispiel des erfindungsgemäßen Verfahrens.

Hierbei ist eine Anlage A der Automatisierungstechnik dargestellt. An einem Datenbus DB sind mehrere Rechnereinheiten WS1, WS2 in Form von Workstation-PCs in der Leitebene der Anlage A angeschlossen. Diese Rechnereinheiten dienen als übergeordnete Einheiten (Leitsystem bzw. Steuereinheit), unter anderem zur Prozessvisualisierung, Prozessüberwachung und zum Engineering wie zum Bedienen und Überwachen von Feldgeräten. Der Datenbus DB arbeitet z. B. nach dem Profibus DP-Standard oder nach dem HSE (High Speed Ethernet)-Standard der Foundation Fieldbus. Über eine Steuereinheit SPS, die insbesondere als speicherprogrammierbare Steuerung ausgestaltet ist, ist die Leitebene der Anlage A mit einem ersten Kommunikationsnetzwerk KN1, hier ein Feldbusnetzwerk, verbunden. Das erste Kommunikationsnetzwerk KN1 umfasst mehrere Feldgeräten FG1, FG2, FG3, die miteinander verbunden sind. Bei den Feldgeräten FG1, FG2, FG3 kann es sich um Sensoren oder um Aktoren handeln. Der Feldbus arbeitet entsprechend nach einem der bekannten z.B. Feldbusstandards Profibus, Foundation Fieldbus oder HART. Anstatt des Feldbusses kann es sich um beliebiges drahtloses oder drahtgebundenes erstes Kommunikationsnetzwerk FB handeln.

Eine Verarbeitungseinheit VE ist parallel zur der Steuerungseinheit SPS mit dem ersten Kommunikationsnetzwerk KN1 verbunden. Bei dieser handelt es sich beispielsweise um ein Gateway. Die Verarbeitungseinheit VE ist mittels Internet mit einem Asset Management System AMS der Anlage verbunden. In dem Asset Management System AMS wird der Bestand der Anlage A abgebildet. Insbesondere sind virtuelle Abbilder der Feldgeräte FG1, FG2 vorgesehen. Die virtuellen Abbilder enthalten Identifikationseigenschaften der Feldgeräte FG1, FG2, insbesondere deren Seriennummer und/oder deren Tag, Merkmalparameter der Feldgeräte, insbesondere Netzwerkeigenschaften wie deren Netzwerkadresse, und Gerätestatus der einzelnen Feldgeräte, insbesondere Namur-konform. Die Verarbeitungseinheit VE ist dazu ausgestaltet, Informationen bezüglich der Gerätestatus der Feldgeräte FG1, FG2 aus dem ersten Kommunikationsnetzwerk KN1 mitzuhören und dem Asset Management System AMS bereitzustellen, damit dieses stets auf dem aktuellen Stand ist. Das Feldgerät FG3 ist nicht im Asset Management System AMS eingetragen.

Aufgrund der im einleitenden Teil der Beschreibung ermittelten Problematik ist eine regelmäßige Überprüfung der Konsistenz der im Asset Management System AMS eingetragenen Feldgeräte FG1, FG2 mit den tatsächlich in der Anlage A befindlichen Feldgeräten FG1, FG2, FG3 nötig, damit die in dem Asset Management System AMS angegebenen Gerätestatus auch tatsächlich dem vorgesehenen Feldgerät FG1, FG2, FG3 entsprechen.

Zu diesem Zweck scannt die Verarbeitungseinheit VE den Adressraum des ersten Kommunikationsnetzwerks. Die Dimensionen des Adressraums sind entweder in der Verarbeitungseinheit VE gespeichert, oder können durch einen Bediener angegeben werden. Meldet sich ein Teilnehmer unter der gerade angesprochenen Netzwerkadresse, so wird dieser in einer Liste aufgenommen. Nach dem Scan des Adressraums liegt der Verarbeitungseinheit eine sogenannte Livelist vor, welche alle aktiven Feldgeräte FG1, FG2, FG3 enthält, welche sich in dem gescannten Adressraum im ersten Kommunikationsnetzwerk befinden.

Die im Asset Management System AMS aufgeführten Feldgeräte, welche sich im Adressraum befinden und geantwortet haben, werden markiert. Zur Konsistenzprüfung stellt die Verarbeitungseinheit VE nach Auswahl des Bedieners im Asset Management System AMS eine Kommunikation über den entsprechenden Kommunikationspfad zu dem ersten Feldgerät FG1 her. Die Verarbeitungseinheit fragt anschließend Identifikationsinformationen des Feldgeräts FG1 ab, in diesem Fall seine Seriennummer, zusammen mit einem Merkmalparameter des Feldgeräts FG1, in diesem Fall seine Netzwerkadresse.

Im nächsten Schritt wird geprüft, ob die Seriennummer der Feldgeräts FG1 jeweils bereits im Asset Management System AMS eingetragen sind. Im vorliegenden Beispiel sind die Seriennummer vorhanden und stimmen mit der des ausgewählten Feldgeräts FG1 überein. Anschließend wird überprüft, ob die ausgelesene Netzwerkadresse der Feldgeräte FG1, FG2 jeweils mit der im Asset Management System AMS eingetragenen Netzwerkadresse übereinstimmt. Für die Feldgeräte FG1, FG2 ist dies der Fall. Die Abbilder der Feldgeräte FG1 im Asset Management System AMS sind daher konsistent mit den in der Anlage A befindlichen Feldgeräten FG1, FG2.

Der Vorgang wird für das Feldgerät FG3 wiederholt. Zwar ist dessen Seriennummer korrekt im Asset Management System AMS eingetragen, jedoch stimmt die Netzwerkadresse nicht überein. Daraufhin wird eine Notifikation eines Handlungsbedarfs an den Bediener übermittelt. Die Verarbeitungseinheit VE übermittelt diese direkt an das Asset Management System AMS, zusammen mit einer Handlungsanweisung, wie das Problem zu beheben ist.

Im vorliegenden Fall gibt es ein zweites Feldgerät, welches eine identische Seriennummer aufweist. Dieses befindet sich in einem weiteren, verschiedenen Feldbussegment. Die Handlungsanweisung beinhaltet den Hinweis an den Bediener, die Seriennummer, welche in das Feldgerät FG2 in der Typenschild eingraviert ist, mit der elektronisch im Feldgerät FG2 gespeicherten Seriennummer zu vergleichen. Im vorliegenden Fall stimmen diese nicht überein. Die im Feldgerät FG2 gespeicherte Seriennummer müsste eine andere sein. Dem Bediener wird daher in der Handlungsanweisung empfohlen, die Firmware des Feldgeräts FG2 zu flashen und die korrekte Seriennummer aufzuspielen, um das Problem zu beheben.

Da die wahre Seriennummer des Feldgeräts FG3 nicht im Asset Management System AMS eingetragen ist, wird diese nach einem erneuten Scan automatisch eingetragen.

### Bezugszeichenliste

- A: Anlage
- AMS: Asset Management System
- FG1, FG2, FG3: Feldgeräte
- KN1: erstes Kommunikationsnetzwerk
- KN2: zweites Kommunikationsnetzwerk
- KP: Kommunikationspfad
- SPS: Steuereinheit
- VE: Verarbeitungseinheit
- WS1, WS2: Workstation PCs

## Patentansprüche

1. Verfahren zur Verifizierung des in einem Asset Management System (AMS) eingetragenen Feldgerätebestands, wobei eine Vielzahl von Feldgeräten (FG1, FG2, FG3) in einem ersten Kommunikationsnetzwerk (KN1) eingebunden sind, umfassend:
i. Verbinden einer Verarbeitungseinheit (VE) mit dem ersten Kommunikationsnetzwerk (KN1);
ii. Auslesen des Adressraums des ersten Kommunikationsnetzwerks (KN1) mittels der Verarbeitungseinheit (VE) zum Generieren einer Liste aller in dem Adressraum befindlichen Feldgeräten (FG1, FG2, FG3);
iii. Aufbau einer Kommunikation zwischen der Verarbeitungseinheit (VE) und einem in der Liste befindlichen Feldgerät (FG1, FG2, FG3) über einen Kommunikationspfad (KP) im ersten Kommunikationsnetzwerk (KN1);
iv. Auslesen von Identifikationsinformationen des Feldgeräts (FG1, FG2, FG3) über die aufgebaute Kommunikation mittels der Verarbeitungseinheit (VE), wobei die Identifikationsinformationen zumindest eine Seriennummer des Feldgeräts (FG1, FG2, FG3) und einen Merkmalparameter des Feldgeräts (FG1, FG2, FG3), insbesondere dessen Kommunikationspfad, umfassen;
v. Durchführen einer Konsistenzprüfung auf dem Asset Management System (AMS), wobei ein negatives Ergebnis der Konsistenzprüfung erzielt wird, wenn im Asset Management System (AMS) bereits ein Feldgerät (FG1, FG2, FG3) unter der ausgelesenen Seriennummer eingetragen ist;
vi. Überprüfen, im Falle eines negativen Ergebnisses der Konsistenzprüfung, ob im Asset Management System (AMS) ein dem Feldgerät (FG1, FG2, FG3) zugeordneter Merkmalparameter dem ausgelesenen Merkmalparameter entspricht; und
vii. Ausgeben einer Notifikation eines Handlungsbedarfs mittels der Verarbeitungseinheit (VE) im Falle, dass im Asset Management System (AMS) ein dem Feldgerät (FG1, FG2, FG3) zugeordneter Merkmalparameter von dem ausgelesenen Merkmalparameter abweicht.

2. Verfahren nach Anspruch 1, wobei das Feldgerät (FG1, FG2, FG3) neu von der Verarbeitungseinheit (VE) in das Asset Management System (AMS) eingetragen wird, im Falle, dass im Asset Management System (AMS) kein Feldgerät (FG1, FG2, FG3) mit dem ausgelesenen Merkmalsparameter eingetragen ist.

3. Verfahren nach Anspruch 1 oder 2, wobei im Zuge des Auslesens zumindest eine weitere Identifikationsinformation aus dem Feldgerät (FG1, FG2, FG3) gelesen wird, insbesondere ein Tag, wobei die Notifikation eines Handlungsbedarfs nur dann ausgegeben wird, wenn im Asset Management System (AMS) ein dem Feldgerät (FG1, FG2, FG3) zugeordneter Netzwerkparameter dem ausgelesenen Netzwerkparameter entspricht und im Asset Management System (AMS) eine dem Feldgerät (FG1, FG2, FG3) zugeordnete weitere Identifikationsinformation der ausgelesenen weiteren Identifikationsinformation entspricht.

4. Verfahren nach zumindest einem der vorherigen Ansprüche, wobei die Verarbeitungseinheit (VE) eine Handlungsanweisung ausgibt, wobei die Handlungsanweisung zumindest eine Handlung umfasst, durch deren Durchführung der Handlungsbedarf gelöst wird.

5. Verfahren nach Anspruch 4, wobei die Handlungsanweisung zumindest einen der folgenden Schritte umfasst:
- Seriennummer im Feldgerät (FG1, FG2, FG3) ändern;
- Weitere Identifikationsinformation im Feldgerät (FG1, FG2, FG3) ändern;
- Weitere Identifikationsinformation im Asset Management System (AMS) ändern.

6. Verfahren nach zumindest einem der vorherigen Ansprüche, wobei als Verarbeitungseinheit (VE) ein PC, ein Laptop, ein Gateway, bzw. Plant Access Point, ein mobiles Endgerät oder eine Bedieneinheit von einem der Feldgeräte (FG1, FG2, FG3) verwendet wird.

7. Verfahren nach zumindest einem der vorherigen Ansprüche, wobei als erstes Kommunikationsnetzwerk (KN1) ein drahtgebundenes Netzwerk verwendet wird, insbesondere ein ethernetbasiertes Netzwerk oder ein Feldbus der Automatisierungstechnik.

8. Verfahren nach zumindest einem der Ansprüche 1 bis 6, wobei als erstes Kommunikationsnetzwerk (KN1) ein drahtloses Netzwerk verwendet wird.

9. Verfahren nach zumindest einem der vorherigen Ansprüche, wobei die Verarbeitungseinheit (VE) das Asset Management System (AMS) über ein zweites Kommunikationsnetzwerk (KN2) kontaktiert, insbesondere über Internet.

10. Verfahren nach zumindest einem der vorherigen Ansprüche, wobei das Verfahren bei einem Neueinbau eines Feldgeräts (FG1, FG2, FG3), bzw. einem Austausch von einem der Feldgeräte (FG1, FG2, FG3), oder bei einem Austausch einer Elektronikkomponente von einem der Feldgeräte (FG1, FG2, FG3) durchgeführt wird.

## Claims

1. Method for verifying the field device inventory entered in an asset management system (AMS), wherein a plurality of field devices (FG1, FG2, FG3) are integrated in a first communication network (KN1), comprising:
i. Connecting a processing unit (VE) to the first communication network (KN1);
ii. Reading out the address space of the first communication network (KN1) using the processing unit (VE) to generate a list of all field devices (FG1, FG2, FG3) located in the address space;
iii. Establishment of communication between the processing unit (VE) and a field device (FG1, FG2, FG3) in the list via a communication path (KP) in the first communication network (KN1);
iv. Reading out identification information of the field device (FG1, FG2, FG3) via the established communication by means of the processing unit (VE), wherein the identification information comprises at least a serial number of the field device (FG1, FG2, FG3) and a feature parameter of the field device (FG1, FG2, FG3), in particular its communication path;
v. Performing a consistency check on the Asset Management System (AMS), whereby a negative result of the consistency check is obtained if a field device (FG1, FG2, FG3) is already entered in the Asset Management System (AMS) under the serial number read out;
vi. In the event of a negative result of the consistency check, check whether a characteristic parameter assigned to the field device (FG1, FG2, FG3) in the Asset Management System (AMS) corresponds to the characteristic parameter read out; and
vii. Output of a notification of a need for action by means of the processing unit (VE) in the event that a characteristic parameter assigned to the field device (FG1, FG2, FG3) in the asset management system (AMS) deviates from the characteristic parameter read out.

2. Method according to claim 1, wherein the field device (FG1, FG2, FG3) is newly entered into the asset management system (AMS) by the processing unit (VE) in the event that no field device (FG1, FG2, FG3) with the read-out characteristic parameter is entered in the asset management system (AMS).

3. Method according to claim 1 or 2, wherein in the course of the readout at least one further identification information item is read from the field device (FG1, FG2, FG3), in particular a tag, wherein the notification of a need for action is only issued if in the asset management system (AMS) a network parameter assigned to the field device (FG1, FG2, FG3) corresponds to the network parameter read out and in the asset management system (AMS) a further identification information item assigned to the field device (FG1, FG2, FG3) corresponds to the further identification information item read out.

4. Method according to at least one of the preceding claims, wherein the processing unit (VE) outputs an action instruction, wherein the action instruction comprises at least one action, by the execution of which the need for action is resolved.

5. The method of claim 4, wherein the action instruction comprises at least one of the following steps:
- Change the serial number in the field device (FG1, FG2, FG3);
- Change further identification information in the field device (FG1, FG2, FG3);
- Change additional identification information in the Asset Management System (AMS).

6. Method according to at least one of the preceding claims, wherein a PC, a laptop, a gateway or plant access point, a mobile terminal or an operating unit of one of the field devices (FG1, FG2, FG3) is used as the processing unit (VE).

7. Method according to at least one of the preceding claims, wherein a wired network is used as the first communication network (KN1), in particular an Ethernet-based network or a field bus of the automation technology.

8. The method according to at least one of claims 1 to 6, wherein a wireless network is used as the first communication network (KN1).

9. The method according to at least one of the preceding claims, wherein the processing unit (VE) contacts the asset management system (AMS) via a second communication network (KN2), in particular via the Internet.

10. Method according to at least one of the preceding claims, wherein the method is carried out during a new installation of a field device (FG1, FG2, FG3), or a replacement of one of the field devices (FG1, FG2, FG3), or during a replacement of an electronic component of one of the field devices (FG1, FG2, FG3).

## Revendications

1. Procédé de vérification de l'inventaire d'appareils de terrain enregistré dans un système de gestion d'actifs (AMS), dans lequel une pluralité d'appareils de terrain (FG1, FG2, FG3) sont intégrés dans un premier réseau de communication (KN1), comprenant :
i. Connecter une unité de traitement (VE) au premier réseau de communication (KN1) ;
ii. lire l'espace d'adresses du premier réseau de communication (KN1) au moyen de l'unité de traitement (VE) pour générer une liste de tous les appareils de terrain (FG1, FG2, FG3) se trouvant dans l'espace d'adresses ;
iii. établir une communication entre l'unité de traitement (VE) et un appareil de terrain (FG1, FG2, FG3) se trouvant dans la liste, par l'intermédiaire d'un chemin de communication (KP) dans le premier réseau de communication (KN1) ;
iv. la lecture d'informations d'identification de l'appareil de terrain (FG1, FG2, FG3) par l'intermédiaire de la communication établie au moyen de l'unité de traitement (VE), les informations d'identification comprenant au moins un numéro de série de l'appareil de terrain (FG1, FG2, FG3) et un paramètre caractéristique de l'appareil de terrain (FG1, FG2, FG3), notamment son chemin de communication ;
v. exécution d'un contrôle de cohérence sur l'Asset Management System (AMS), un résultat négatif du contrôle de cohérence étant obtenu lorsqu'un appareil de terrain (FG1, FG2, FG3) est déjà enregistré sous le numéro de série lu dans l'Asset Management System (AMS) ;
vi. vérifier, en cas de résultat négatif du contrôle de cohérence, si un paramètre caractéristique attribué à l'appareil de terrain (FG1, FG2, FG3) dans l'Asset Management System (AMS) correspond au paramètre caractéristique lu ; et
vii. émettre une notification d'un besoin d'action au moyen de l'unité de traitement (VE) dans le cas où, dans l'Asset Management System (AMS), un paramètre caractéristique associé à l'appareil de terrain (FG1, FG2, FG3) diffère du paramètre caractéristique lu.

2. Procédé selon la revendication 1, dans lequel l'appareil de terrain (FG1, FG2, FG3) est nouvellement enregistré par l'unité de traitement (VE) dans le système de gestion d'actifs (AMS) dans le cas où aucun appareil de terrain (FG1, FG2, FG3) avec le paramètre caractéristique lu n'est enregistré dans le système de gestion d'actifs (AMS).

3. Procédé selon la revendication 1 ou 2, dans lequel, au cours de la lecture, au moins une autre information d'identification est lue à partir de l'appareil de terrain (FG1, FG2, FG3), en particulier une étiquette, la notification d'un besoin d'action n'étant émise que si, dans l'Asset Management System (AMS), un paramètre de réseau affecté à l'appareil de terrain (FG1, FG2, FG3) correspond au paramètre de réseau lu et, dans l'Asset Management System (AMS), une autre information d'identification affectée à l'appareil de terrain (FG1, FG2, FG3) correspond à l'autre information d'identification lue.

4. Procédé selon au moins l'une des revendications précédentes, dans lequel l'unité de traitement (VE) émet une instruction d'action, l'instruction d'action comprenant au moins une action dont la réalisation permet de résoudre le besoin d'action.

5. Procédé selon la revendication 4, dans lequel l'instruction d'action comprend au moins l'une des étapes suivantes :
- Modifier le numéro de série dans l'appareil de terrain (FG1, FG2, FG3) ;
- Modifier d'autres informations d'identification dans l'appareil de terrain (FG1, FG2, FG3) ;
- Modifier d'autres informations d'identification dans l'Asset Management System (AMS).

6. Procédé selon au moins l'une des revendications précédentes, dans lequel on utilise comme unité de traitement (VE) un PC, un ordinateur portable, une passerelle, ou un point d'accès de site, un terminal mobile ou une unité de commande de l'un des appareils de terrain (FG1, FG2, FG3).

7. Procédé selon au moins l'une des revendications précédentes, dans lequel on utilise comme premier réseau de communication (KN1) un réseau filaire, notamment un réseau basé sur Ethernet ou un bus de terrain de la technique d'automatisation.

8. Procédé selon au moins l'une des revendications 1 à 6, dans lequel on utilise comme premier réseau de communication (KN1) un réseau sans fil.

9. Procédé selon au moins l'une des revendications précédentes, dans lequel l'unité de traitement (VE) contacte le système de gestion d'actifs (AMS) via un deuxième réseau de communication (KN2), notamment via Internet.

10. Procédé selon au moins l'une des revendications précédentes, dans lequel le procédé est mis en oeuvre lors d'une nouvelle installation d'un appareil de terrain (FG1, FG2, FG3), ou d'un remplacement d'un des appareils de terrain (FG1, FG2, FG3) , ou lors d'un remplacement d'un composant électronique d'un des appareils de terrain (FG1, FG2, FG3).
